# EUROPEAN PATENT APPLICATION

(11) **EP 4 650 970 A1**
(43) Date of publication of application: **19.11.2025**
(21) Application number: 24176753.2
(22) Date of filing: 17.05.2024
(51) Int. Cl.: G06F 11/36

(54) **APPARATUS AND METHOD FOR SIMULATION BASED ON EXTERNAL TRIGGER INFORMATION**

(71) Applicant: ThorDrive Co., Ltd., Seoul Yeongdeungpo-gu 07268 (KR)
(72) Inventor: Choi, Jongseo, 08072 Seoul (KR); Kwon, Daehyeok, 08754 Seoul (KR); Kim, Hanvit, 07253 Seoul (KR); Chin, Hyuntai, 10063 Gyeonggi-do (KR)
(74) Representative: Beck Greener LLP

(57) **Abstract**

Exemplary embodiment of the present disclosure seeks to provide a peripheral object control algorithm management device for obtaining external trigger information regarding behavior of a peripheral object, determining a first input of a peripheral object control algorithm corresponding to the external trigger information regarding a behavior of the peripheral object, determining a first output of the peripheral object control algorithm based on said first input, and providing the first output to a peripheral object management device.

## Description

### [Background of the invention]

### [Technical field]

The present disclosure relates to an apparatus and method for performing simulations. More specifically, the present disclosure relates to an apparatus and method for performing a simulation by controlling a behavioral algorithm of an external object in a simulation for validating an autonomous driving algorithm.

### [Description of the Related Art]

An autonomous vehicle is a vehicle that can drive itself without driver intervention, and can drive autonomously by simply recognizing its surroundings and specifying a destination using radar (radio detection and ranging), LiDAR (light detection and ranging), GPS (global positioning system), cameras, etc. In order for these autonomous vehicles to be commercialized, their reliability must be guaranteed. To test the safety of autonomous vehicles, test drives on real roads with real cars are time-consuming and expensive, and the risk of accidents is high, making it difficult to conduct research. To solve these difficulties, autonomous driving technology research is being conducted by implementing various situations on the road in a virtual environment simulator. However, simulations are generally based on rule-based judgment and driving patterns are predetermined, so there are limitations in reproducing irregular human driving behavior in a simulation environment, such as restarting after attempting to stop or returning to a lane while changing lanes. Nevertheless, in order to commercialize autonomous driving, it is necessary to prepare for irregular human driving, and this disclosure is intended to do just that.

### [Summary of the invention]

### [Challenge to solve]

One embodiment of the present disclosure is intended to provide a simulation apparatus and method based on external trigger information.

Further, one embodiment of the present disclosure seeks to provide an autonomous driving simulation apparatus and method that can prepare for irregular driving situations.

### [Solution to the challenge]

One embodiment of the present disclosure seeks to provide a simulation apparatus and method based on external trigger information.

In a peripheral object control algorithm management device, an embodiment of the present disclosure includes a memory storing one or more instructions; at least one processor executing said one or more instructions stored in said memory, said at least one processor executing said one or more instructions to obtain external trigger information regarding behavior of a peripheral object, determine a first input of a peripheral object control algorithm corresponding to said external trigger information regarding behavior of said peripheral object, determine a first output of said peripheral object control algorithm based on said first input and provide said first output to the peripheral object management device.

In one embodiment, the external trigger information about the behavior of said peripheral object may include at least one user input to change the behavior of said peripheral object, trigger information about the behavior of said peripheral object determined by an artificial intelligence learning model and a specific value determined by a random function.

In one embodiment, said at least one processor may, by executing said one or more instructions, obtain scenario information regarding a driving pattern, including at least one of a target speed, an acceleration, a driving lane, and a destination, and, based on said scenario information, determine a second output of said peripheral object control algorithm, transmit said second output to said peripheral object management device, receive motion information of the said peripheral object from said peripheral object management device, and receive motion information of said autonomous vehicle target from said autonomous vehicle target management device.

In one embodiment, said at least one processor may, by executing said one or more instructions, receive scenario information comprising information of a condition under which a behavior pattern changes, identify, based on said information of a condition under which a behavior pattern changes, an event triggering a change in said behavior pattern, determine a third output of said peripheral object control algorithm based on a behavior pattern corresponding to said event triggering a change in said behavior pattern, and transmit said third output to said peripheral object management device.

One embodiment of the present disclosure seeks to provide, in a simulation device, a peripheral object management device that controls a peripheral object by receiving scenario information and a peripheral object control algorithm; and an autonomous vehicle target management device that controls an autonomous vehicle target by receiving said scenario information and an autonomous vehicle target control algorithm, wherein said peripheral object management device receives a first output determined by said peripheral object control algorithm from said peripheral object management device using external trigger information as input, and controls said peripheral object based on said first output.

In one embodiment, said external trigger information may include at least one user input to change the behavior of said surrounding object, trigger information about the behavior of said surrounding object determined by an artificial intelligence learning model, and input determined by a random function.

In one embodiment, the simulation device may further comprise a peripheral object control algorithm management device, said peripheral object control algorithm management device obtaining said external trigger information, determining said first output of said peripheral object control algorithm based on said external trigger information, and providing said first output to said peripheral object management device.

In one embodiment, said peripheral object control algorithm management device may be a separate device from said simulation device.

In one embodiment, said peripheral object management device may determine the state of said peripheral object based on an output of said peripheral object control algorithm and provide the state of said peripheral object to said peripheral object control algorithm management device and the autonomous vehicle target control algorithm management device.

In one embodiment, said autonomous object management device may determine a state of said autonomous object based on an output of said autonomous object control algorithm, and provide said state of said autonomous object to said peripheral object control algorithm management device and the autonomous object control algorithm management device.

One embodiment of the present disclosure seeks to provide a method of operating a peripheral object control algorithm management device, the method comprising: obtaining external trigger information regarding the behavior of a peripheral object; identifying a first input of the peripheral object control algorithm, corresponding to the external trigger information regarding the behavior of the peripheral object; determining a first output of the peripheral object control algorithm, based on said first input; and providing said first output to the peripheral object management device.

In one embodiment, the external trigger information about the behavior of said peripheral object may include at least one of user input to change the behavior of said peripheral object, trigger information about the behavior of said peripheral object determined by an artificial intelligence learning model, and input determined by a random function.

In one embodiment, said method may further comprise: obtaining scenario information regarding a driving pattern comprising at least one of a target speed, an acceleration, a driving lane, and a destination; determining a second output of said peripheral object control algorithm based on said scenario information; transmitting said second output to said peripheral object management device; receiving motion information of said peripheral object from said peripheral object management device; and receiving motion information of said autonomous vehicle target from an autonomous vehicle target management device.

In one embodiment, said method may further comprise: receiving scenario information comprising information of a condition under which a behavior pattern changes; identifying, based on said information of a condition under which a behavior pattern changes, an event triggering a change in said behavior pattern; determining, based on a behavior pattern corresponding to the event triggering the change in said behavior pattern, a third output of said peripheral object control algorithm; and transmitting said third output to said peripheral object management device.

One embodiment of the present disclosure is a method of operating a simulation device, said method comprising: receiving scenario information; obtaining a peripheral object control algorithm; receiving an autonomous driving target control algorithm; and controlling a peripheral object based on said scenario information and said peripheral object control algorithm; A method of controlling an autonomous vehicle, said method further comprising: receiving a first output determined by said peripheral object control algorithm based on said scenario information and said autonomous vehicle control algorithm; and controlling said peripheral object based on said first output, said method comprising: taking external trigger information as an input.

In one embodiment, said external trigger information may include at least one of user input to change the behavior of said surrounding object, trigger information about the behavior of said surrounding object determined by an artificial intelligence learning model, and input determined by a random function.

In one embodiment, said method may further comprise: obtaining said external trigger information; determining, based on said external trigger information, said first output of said peripheral object control algorithm; and providing said first output to a peripheral object management device.

In one embodiment, said peripheral object control algorithm is transmitted from a peripheral object control algorithm management device, and said peripheral object control algorithm management device may be a separate device from said simulation device.

In one embodiment, the operation of controlling said peripheral object may include: determining a state of said peripheral object based on said peripheral object control algorithm; and providing the state of said peripheral object to the peripheral object control algorithm management unit and the autonomous vehicle target control algorithm management unit.

In one embodiment, controlling said autonomous object may include: determining a state of said autonomous object based on said autonomous object control algorithm; and providing the state of said autonomous object to a peripheral object control algorithm management device and an autonomous object control algorithm management device.

One embodiment of the present disclosure includes a program stored on a recording medium for executing a method of the present disclosure on a computer.

One embodiment of the present disclosure includes a computer-readable recording medium recording a program for executing on a computer a method according to one embodiment of the present disclosure.

One embodiment of the present disclosure includes a computer-readable recording medium that records a database used in one embodiment of the present disclosure.

According to one embodiment of the present disclosure, autonomous driving simulations required for commercialization of autonomous driving may be provided.

### [Brief description of the drawings

FIG. 1 is a flowchart of a method of operation of a peripheral object control algorithm management device, according to one embodiment of the present disclosure.
FIG. 2 is a flowchart of a method of operating a simulation device, according to one embodiment of the present disclosure.
FIG. 3 is a diagram illustrating a simulation method using a peripheral object control algorithm management device inherent in a simulation device, according to one embodiment of the present disclosure.
FIG. 4 is a diagram illustrating a simulation method based on external trigger information, according to one embodiment of the present disclosure.
FIG. 5 is a block diagram of a peripheral object control algorithm management device, according to one embodiment of the present disclosure.
FIG. 6 is a block diagram of a simulation device according to one embodiment of the present disclosure.

### [Detailed description of embodiments of the invention]

In order to clarify the technical ideas of the present disclosure, embodiments of the present disclosure are described in detail with reference to the accompanying drawings. In describing this disclosure, specific descriptions of relevant notice features or components will be omitted if it is determined that such detailed description would unnecessarily obscure the gist of this disclosure. In the drawings, components having substantially the same functional configuration are given the same reference numerals and symbols wherever possible, even if they are shown on different drawings. For clarity, we describe both the device and the method together when necessary. Each of the operations of this disclosure need not be performed in the order described and may be performed in parallel, optionally, or separately.

The terminology used in the embodiments of the present disclosure has been chosen to be as generic as possible in current popular usage while taking into account the features of the disclosure, but may vary according to the intent or precedent of those skilled in the art, the emergence of new technologies, etc. In addition, in certain cases, terms are arbitrarily chosen by the Applicant, and their meaning will be explained in detail in the description of the applicable embodiment. Accordingly, terms used in this specification should be defined based on their meaning and the context of this disclosure as a whole, rather than as mere names of terms.

Throughout this disclosure, singular expressions may include plural expressions unless the context clearly indicates otherwise. Terms such as "includes" or "has" are intended to specify the presence of a feature, number, step, action, component, part, or combination thereof, and are not intended to preclude the possibility of the presence or addition of one or more other features, numbers, steps, actions, components, parts, or combinations thereof. In other words, throughout this disclosure, when we say that a part "includes" a component, we mean that it may further include other components, not exclude other components, unless specifically stated to the contrary.

Expressions such as "at least one" modify the entire list of components, not the components of the list individually. For example, "at least one of A, B, and C" and "at least one of A, B, or C" refer to only A, only B, only C, both A and B, both B and C, both A and C, both A and B and C, or any combination.

In addition, the terms "...part," "...module," and the like as used in this disclosure refer to a unit that handles at least one function or operation, which may be implemented in hardware or software, or a combination of hardware and software.

Throughout this disclosure, when a part is said to be "connected" to another part, this includes not only being "directly connected" but also being "electrically connected" with another element in between. Also, when something is said to "include" a component, it means that it can include more components, not that it excludes other components, unless specifically stated to the contrary.

As used throughout this disclosure, the expression "configured to" may be used interchangeably with, for example, "suitable for," "having the capacity to," "designed to," "adapted to," "made to," or "capable of," depending on the context. The term "configured (or set up) to" may not necessarily mean "specifically designed for" hardware. Instead, in some situations, the phrase "system configured to" may mean that the system is "capable of working with other devices or components. For example, the phrase "a processor configured (or set up) to perform A, B, and C" refers to a dedicated processor for performing those actions (e.g: embedded processor), or a generic-purpose processor that can perform those actions by executing one or more software programs stored in its memory (e.g: CPU or application processor).

One embodiment of the present disclosure seeks to provide a simulation device, a peripheral object control algorithm management device, a peripheral object management device, an autonomous driving target control algorithm management device, an autonomous driving target management device, and an operation method thereof. Throughout this disclosure, a device may include a server, and a server may be referred to as a device, or a device may be referred to as a server. Throughout this disclosure, some or all of the devices may be included in a single device. Alternatively, each device can be contained in a different device.

Throughout this disclosure, an ambient object may include a non-player character (NPC) such as an opposing vehicle, opposing train, opposing ship, opposing aircraft, pedestrian, animal, etc. of an autonomous driving target that is the subject of an autonomous driving simulation. Accordingly, the peripheral object control algorithm may include the NPC control algorithm.

Throughout this disclosure, updating an algorithm may include feeding inputs into that algorithm to produce outputs, and modifying or supplementing the algorithm itself.

Throughout this disclosure, external trigger information is information received from outside the simulation device to change the behavior of a peripheral object, and may include user input to change the behavior of a peripheral object, information determined by an artificial intelligence learning model to change the behavior of a peripheral object, information about the behavior of a peripheral object for which a specific value is determined by a random function and mapped to the specific value, and the like. For example, information about the behavior of nearby objects mapped to a particular value might be as follows [Table 1] .

**[Table 1] .**

| **Specific values** | **Information about the behavior of nearby objects** |
|---|---|
| 1 | Add a construction environment. |
| 2 | Restart after a stop attempt |
| 3 | Restart after a departure attempt |
| 4 | Returning to a lane after attempting to change lanes |
| 5 | Sudden stops |

Also, throughout this disclosure, autonomous objects may include various objects of autonomy, such as autonomous vehicles, autonomous ships, autonomous airplanes, autonomous trains, autonomous trains, autonomous drones, and the like.

In general, autonomous driving simulations are performed by following a driving pattern determined by considering the results of processes such as identifying collisions with other vehicles, identifying traffic signals, identifying stop lines, and checking speed limits on a route from the current location on a map to a random destination. The driving pattern is chosen based on rules such as the presence of signals, speed limits, and the order in which intersections are passed. These general autonomous driving simulations are limited by the fact that driving patterns are determined by simple judgments based on rules, so they cannot reproduce normal human driving without rules. This talk will propose a method for simulating autonomous driving to reproduce typical human driving that is not rule-based.

According to one embodiment of the present disclosure, the driving process of perceive-judge-drive of a vehicle may utilize a human-in-the-loop (HITL) method that allows for human intervention in the "judgment" portion of the driving process, resulting in a driving pattern that resembles human driving where judgments can change frequently, for example, restarting and restarting after attempting to stop.

Furthermore, according to one embodiment of the present disclosure, during a simulation operation for verification of an autonomous driving algorithm, external information received via an input device in real time may intervene in the driving of a nearby object to cause interaction with the autonomous vehicle.

Further, according to one embodiment of the present disclosure, a simulation method can be provided that can safely perform testing of incomplete algorithms while saving time, money, and effort.

Further, according to one embodiment of the present disclosure, the emulation of a realistic driving environment for the interaction of an autonomous vehicle with surrounding objects may be performed.

Further, according to one embodiment of the present disclosure, complex interactions such as real-world driving environments can be implemented in a simulation to improve the reliability of autonomous driving algorithms.

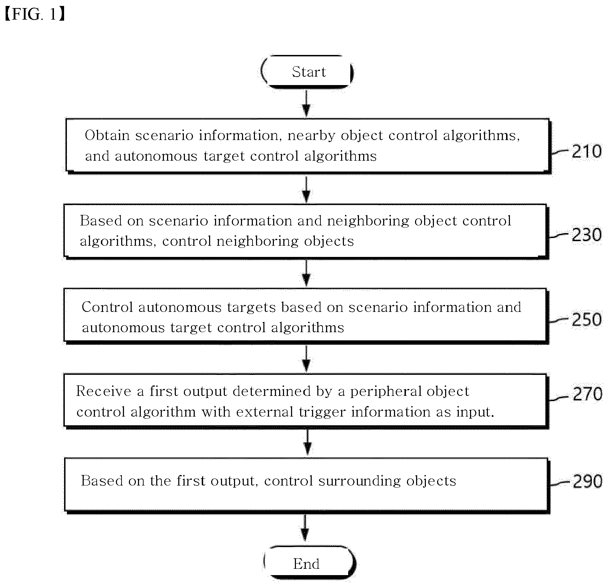

FIG. 1 is a flowchart of a method of operation of a peripheral object control algorithm management device, according to one embodiment of the present disclosure.

Referring to FIG. 1, in operation 110, the peripheral object control algorithm management device may obtain external trigger information regarding the behavior of a peripheral object. In one embodiment, the external trigger information about the behavior of the nearby object may include at least one user input to change the behavior of the nearby object, trigger information about the behavior of the nearby object determined by an artificial intelligence learning model, and a specific value determined by a random function. Here, the user input for changing the behavior of the surrounding objects may be an input device that can be used by a person to input one or more independent pieces of information, such as input via a keyboard, input via a screen touch, or voice input via a microphone. In addition, the AI learning model can be a learning model that has been trained on human behavior. Accordingly, an artificial intelligence learning model can determine trigger information for behavior by learning unexpected human behavior, behavior in which judgments change frequently, and the like, and provide the determined trigger information to the peripheral object control algorithm management device.

In operation 130, the peripheral object control algorithm management device may determine the first input of the peripheral object control algorithm, corresponding to the external trigger information regarding the behavior of the peripheral object. In one embodiment, the peripheral object control algorithm management device may determine, based on external trigger information, a first input for generating a behavioral pattern similar to human driving, where the judgment is subject to frequent change. Here, the behavior pattern may include a driving pattern. In one embodiment, when the external trigger information is a specific value determined by a random function, the peripheral object control algorithm management device may identify the behavior of the peripheral object corresponding to the specific value based on a predefined mapping table. Further, the peripheral object control algorithm management device may determine the first input of the peripheral object control algorithm that corresponds to the identified behavior. For example, the first input may include input values from a peripheral object control algorithm.

According to one embodiment, during a simulation operation for verification of an autonomous driving algorithm, external trigger information may be reflected in real time in the behavior of a nearby object via an input device, resulting in interaction between the external trigger information and the autonomous driving object. As a result, simulations can be performed in irregular situations.

In operation 150, the peripheral object control algorithm management device may determine the first output of the peripheral object algorithm based on the first input. For example, the first output may be an input value required by the peripheral object management device to control a peripheral object according to a behavior pattern. That is, the first output of a peripheral control algorithm can be a required input to a peripheral object management device. In one embodiment, the peripheral object control algorithm management device may calculate input values required by the peripheral object management device to change to the identified behavior pattern. In addition, the peripheral object control algorithm management device may provide the corresponding input values to the peripheral object management device.

In one embodiment, the peripheral object control algorithm management device may determine and provide an output value to the peripheral object management device to change the identified behavior pattern.

At operation 170, the first output may be provided to a peripheral object management device. Based on the first output, the peripheral object management device may control the peripheral object. In one embodiment, the peripheral object management device may calculate the state of the peripheral object based on the first output received from the peripheral object control algorithm management device. Further, the peripheral object management unit may provide the calculated state of the peripheral object to the peripheral object control algorithm management unit and the autonomous vehicle target control algorithm management unit.

According to one embodiment, the state information of the surrounding objects may be transmitted to each algorithm management device, and the state information of the surrounding objects may be input to each algorithm to generate an interaction between the surrounding objects and the autonomous vehicle target.

According to one embodiment, the driving pattern can be changed in real time based on external trigger information received during the scenario, and the autonomous driving algorithm can be validated based on the results of interactions resulting from the changed driving pattern in real time.

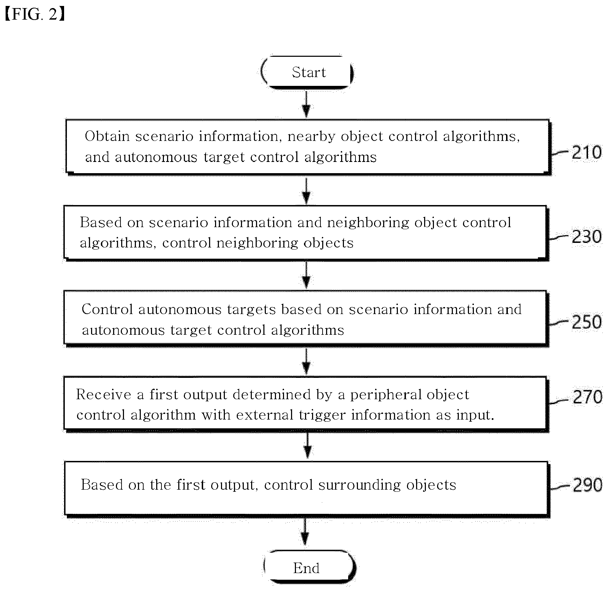

FIG. 2 is a flowchart of a method of operating a simulation device, according to one embodiment of the present disclosure.

Referring to FIG. 2, in operation 210, the simulation device may obtain scenario information, a peripheral object control algorithm, and an autonomous target control algorithm. In one embodiment, a peripheral object management device included in the simulation device may receive scenario information and peripheral object algorithms, and an autonomous target management device included in the simulation device may receive scenario information and autonomous target control algorithms.

In one embodiment, the scenario information may include initial state information of the autonomous vehicle target and surrounding objects. The peripheral object management device and the autonomous driving target management device may obtain the initial state information described in the scenario to determine the initial state of the peripheral object and the autonomous driving target, respectively. For example, scenario information can include input values required by each algorithm or output values from each algorithm, such as the initial position, initial acceleration, initial velocity, initial direction, and destination of the autonomous target and surrounding objects. Scenario information can also include information about the behavior patterns of surrounding objects and the conditions that trigger the occurrence of the behavior patterns. The condition information that triggers the occurrence of a behavior pattern can include information about the conditions for a particular behavior to occur. For example, scenario information can include driving patterns such as acceleration, deceleration, lane changes, and destination changes. In one embodiment, based on the scenario information, the point at which the driving pattern changes may be determined using, for example, the state of the autonomous vehicle or the state of nearby objects. For example, the absolute position of the autonomous vehicle or surrounding objects, driving speed, etc. may be determined based on the absolute state of the surrounding objects or the absolute state of the autonomous vehicle. Alternatively, the relative position, relative speed, etc., of the autonomous vehicle and the surrounding objects may be determined based on the relative state of the autonomous vehicle and the surrounding objects.

In one embodiment, the peripheral object control algorithm management device may obtain information about a driving pattern, such as a target speed, a target acceleration, a driving lane, and a destination, from the scenario information to calculate input values required by the driving object management device to perform the described driving. Here, the input values required by the driving object management device may be output values of a peripheral object control algorithm that are determined to enable the described driving.

In one embodiment, the peripheral object control algorithm management device may obtain from the scenario information of a condition under which the behavior pattern changes and calculate input values required of the peripheral object management device to change the behavior pattern when the condition is satisfied. Here, the input value for the peripheral object management device to change the behavior pattern may be an output value of a peripheral object control algorithm that is determined to change the behavior pattern.

In one embodiment, the autonomous vehicle target control algorithm management device may calculate and output input values required by the autonomous vehicle target management device to enable the autonomous vehicle target management device to perform an action described in the autonomous vehicle target control algorithm. In other words, the input values required by the autonomous target management device may be the output values determined by the autonomous target control algorithm, and the autonomous target control algorithm may be the target that you want to validate using simulation.

In operation 230, the simulation device may control the peripheral objects based on the scenario information and the peripheral object control algorithm. In one embodiment, a peripheral object management device included in the simulation device may control peripheral objects based on scenario information and a peripheral object control algorithm. For example, a peripheral object management device may determine the state of a peripheral object, such as the position, orientation, velocity, and acceleration of the peripheral object, by specifying the state of the peripheral object as a particular value or by calculating it in a prescribed manner. Further, the peripheral object management device may obtain the initial state information of the peripheral object described in the scenario information and determine the state of the peripheral object to correspond to the value at the beginning of the scenario progression. Further, the peripheral object management device may obtain input values necessary to calculate the state of the peripheral object from the peripheral object control algorithm, and calculate the state of the peripheral object based on the obtained input values. Further, the peripheral object management device may provide the calculated state of the peripheral objects as input to the peripheral object control algorithm and the autonomous driving target algorithm.

In operation 250, the simulation device may control the autonomous vehicle target based on the scenario information and the autonomous vehicle target control algorithm. In one embodiment, the autonomous driving target management device included in the simulation device may control the autonomous driving target based on the scenario information and the autonomous driving target control algorithm. For example, the autonomous driving target management device may specify the state of the autonomous driving target, such as the location, direction, speed, acceleration, etc., of the autonomous driving target as a specific value or calculate it in the manner described. Further, the autonomous driving target management device may obtain the initial state information of the autonomous driving target described in the scenario information, and determine the initial state of the autonomous driving target at the beginning of the scenario progression based on the initial state information. Further, the autonomous driving target management device may obtain input values necessary to calculate the state of the autonomous driving target from the autonomous driving target control algorithm, and calculate the state of the autonomous driving target using the input values. Further, the autonomous target management device may provide the calculated state of the autonomous target as an input to the peripheral object control algorithm and the autonomous target control algorithm.

At operation 270, the simulation device may receive a first output from the peripheral object control algorithm management device. In one embodiment, the first output may be an output value determined by the peripheral object control algorithm management device based on the external trigger information as input.

At operation 290, the simulation device may control a peripheral object based on the first output. In one embodiment, a peripheral object management device included in the simulation device may control a peripheral object based on the received first output. Controlling a peripheral object may include determining a driving pattern for the peripheral object, including a driving direction, driving speed, driving acceleration, and the like.

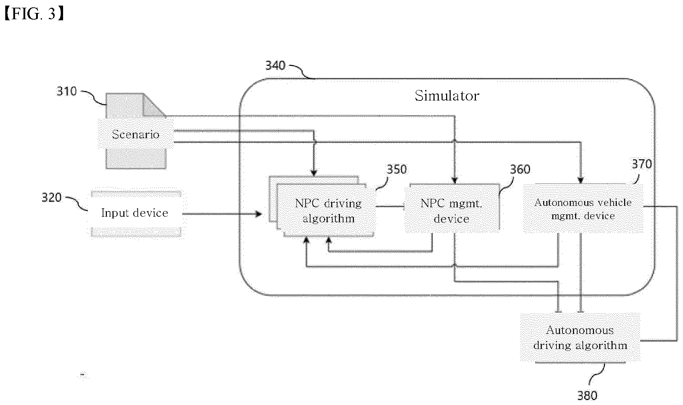

FIG. 3 is a diagram illustrating a simulation method using a peripheral object control algorithm management device inherent in a simulation device, according to one embodiment of the present disclosure.

Referring to FIG. 3, an NPC driving algorithm 350 is shown as an example of a peripheral object control algorithm, an NPC management device 360 is shown as an example of a peripheral object management device, an autonomous driving algorithm 380 is shown as an example of an autonomous driving target control algorithm, and an autonomous vehicle management device 370 is shown as an example of an autonomous driving target management device. The NPC driving algorithm 350, NPC management device 360, autonomous driving algorithm 380, and autonomous vehicle management device 370 are described below using the above examples but are not limited thereto and may be replaced by equivalent or peripheral object control algorithms, peripheral object management devices, autonomous object control algorithms, and autonomous object management devices, respectively.

In one embodiment, the simulator may include an NPC driving algorithm management device 350, an NPC management device 360, and an autonomous vehicle management device 370. The NPC driving algorithm 350 management device may be a device that feeds input values into the NPC driving algorithm 350 to derive output values.

In one embodiment, the output of the NPC driving algorithm 350 may be determined using scenario information 310 as input. In one embodiment, if there are multiple NPCs, there may also be multiple NPC driving algorithms 350. For example, if there are opposing vehicles, pedestrians, and animals as NPCs in a simulation situation, there may be separate driving algorithms for opposing vehicles, behavior algorithms for pedestrians, and behavior algorithms for animals. In addition, the NPC driving algorithm management unit included in the simulator 340 may derive a new output using the NPC driving algorithm 350 when it receives external trigger information from the input device 320. For example, the NPC driving algorithm management unit included in the simulator 340 may use scenario information 310 and the external trigger information received from the input device 320 as input to determine an output according to the NPC driving algorithm 350.

In one embodiment, the NPC management device 360 may obtain scenario information 310. Scenario information 310 may include scenario information for the NPC. Further, the NPC management device 360 may obtain an output determined based on the NPC driving algorithm 350. The NPC management device 360 may control the behavior of the NPCs based on the NPC driving algorithm 350 and the scenario information 310, and transmit the status information of the NPCs as a result of the control to the peripheral object control algorithm management device and the autonomous object control algorithm management device. The peripheral object control algorithm management device may derive new output values according to the NPC driving algorithm 350 based on the received state information of the NPCs. Furthermore, the autonomous driving target control algorithm management device may determine an output value by the autonomous driving algorithm 380 based on the status information received from the NPCs. In other words, based on the state information of the NPCs, the output based on the NPC driving algorithm 350 and the output based on the autonomous driving algorithm 380 may be determined.

In one embodiment, the autonomous vehicle management device 370 may obtain the scenario information 310. Scenario information 310 may include scenario information for the autonomous vehicle. Further, the autonomous vehicle management device 370 may determine the state information of the autonomous vehicle based on scenario information 310. For example, autonomous vehicle management device 370 may take scenario information 310 as input and determine output values via autonomous driving algorithm 380. Based on the output value, the autonomous vehicle management device 370 may determine the status information of the autonomous vehicle. Further, the autonomous vehicle management device 370 may transmit the status information of the autonomous vehicle to the NPC driving algorithm management device and the autonomous driving algorithm management device. Accordingly, scenario information 310, the external trigger information by the input device 320, the state information of the autonomous vehicle, and the state information of the NPC may all be considered to determine an output value via the NPC driving algorithm 350. In addition, the autonomous driving algorithm management device may consider the state information of the autonomous vehicle and the state information of the NPC to derive new output values based on the autonomous driving algorithm.

In one embodiment, the state of the NPCs may be determined through the interaction of the NPC driving algorithm 350, the NPC management device 360, and the autonomous vehicle management device 370, and the driving pattern of the autonomous vehicle may be determined based on the state of the NPCs and the autonomous driving algorithm 380.

Furthermore, according to one embodiment, by further considering external trigger information by the input device 320, a driving pattern similar to human driving, whose judgment can change frequently, may be generated.

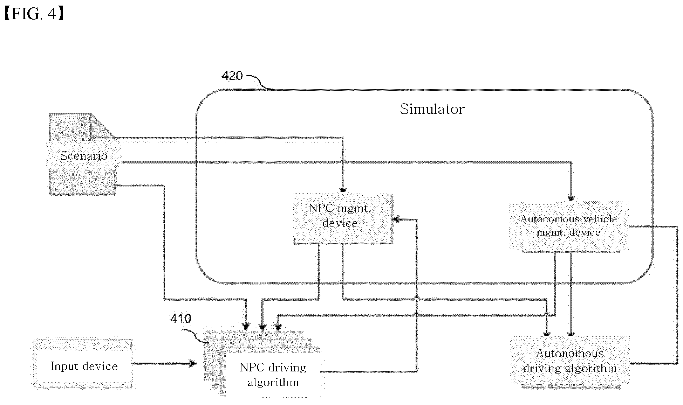

FIG. 4 is a diagram illustrating a simulation method based on external trigger information, according to one embodiment of the present disclosure.

Referring to FIG. 4, the sending and receiving of information is the same as in FIG. 3, but the NPC driving algorithm determination device 410 is a separate device from the simulator 420, and the NPC driving algorithm determination device 410 exchanges information with the simulator 420 so that autonomous driving simulation operations can be performed. That is, the NPC driving algorithm 410 may be stored and executed in memory outside of the simulator 420.

That is, the simulator 340 of FIG. 3 may include a peripheral object control algorithm management device that obtains the external trigger information, determines the first output of the peripheral object control algorithm based on the external trigger information, and provides the first output to the peripheral object management device, whereas the peripheral object control algorithm management device of FIG. 4 may be a separate device from the simulator 420.

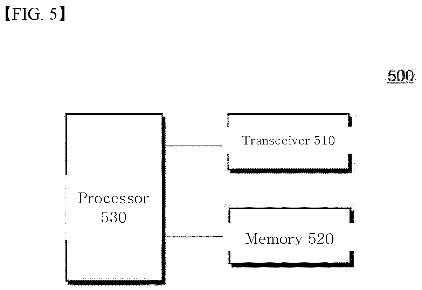

FIG. 5 is a block diagram of a peripheral object control algorithm management device, according to one embodiment of the present disclosure.

Referring to FIG. 5, the peripheral object control algorithm management device 500 may include a transceiver 510, a memory 520, and a processor 530. However, not all of the components illustrated in FIG. 5 are required components of the perimeter object control algorithm management unit 500. The peripheral object control algorithm management device 500 may be implemented by more components than the components shown in FIG. 5, or the peripheral object control algorithm management device 500 may be implemented by fewer components than the components shown in FIG. 5. Additionally, the transceiver 510, processor 530, and memory 520 may be implemented on a single chip.

In one embodiment, the transceiver 510 may communicate with a terminal, server, or other electronic device wired or wirelessly connected to the peripheral object control algorithm management device 500. Various kinds of data, such as programs and files, such as applications, may be installed and stored in memory 520. The Processor 530 may access and utilize data stored in memory 520 or may store new data in memory 520.

The processor 530 controls the overall operation of the peripheral object control algorithm management device 500, and may include at least one processor such as a CPU, GPU, or the like. The processor 530 may control other configurations included in the peripheral object control algorithm management device 500 to perform actions to operate the peripheral object control algorithm management device 500. For example, processor 530 may execute a program stored in memory 520, read a stored file, or store a new file. In one embodiment, the processor 530 may execute a program stored in the memory 520 to perform operations to operate the peripheral object control algorithm management device 500.

In one embodiment, the processor 530 may obtain external trigger information regarding the behavior of a neighboring object. For example, external trigger information can include user input values that allow the user to change the driving pattern in real time at a time of their choosing. Based on the user input value, the processor 530 may determine a first input to the peripheral object control algorithm that corresponds to the external trigger information. Further, based on the first input, the processor 530 may determine a first output via a peripheral object control algorithm. In other words, the first output may be the output value that results from inputting the first input to the peripheral object control algorithm. For example, the processor 530 may calculate the input values required by the peripheral object management device to change to a specified behavior pattern, and control the transceiver 510 to transmit those input values to the peripheral object management device. Here, the input value required by the peripheral object management device may be the first output derived from the peripheral object control algorithm.

Further, in one embodiment, the processor 530 may obtain scenario information regarding a driving pattern, including at least one of a target speed, acceleration, driving lane, and destination, and determine a second output of the peripheral object control algorithm based on the scenario information. The second output may be an output value determined by a peripheral object control algorithm given the scenario information as input. That is, the processor 530 may obtain information about the driving pattern and calculate and output the necessary input values to the peripheral object management device to enable the described driving. Further, the processor 530 may control the transceiver 510 to transmit the second output to the peripheral object management device, control the transceiver 510 to receive motion information of the peripheral object from the peripheral object management device, and control the transceiver 510 to receive motion information of the autonomous vehicle target from the autonomous vehicle target management device. Here, the motion information of the peripheral object includes the motion information of the peripheral object determined based on the second output, and the motion information of the autonomous driving target may include the motion information of the autonomous driving target determined based on the motion information of the peripheral object determined based on the second output.

In addition, in one embodiment, the processor 530 may control the transceiver 510 to receive scenario information that includes condition information that causes the behavior pattern to change. Additionally, the processor 530 may identify an event that triggers a change in the behavior pattern, based on the condition information that causes the behavior pattern to change. Further, the processor 530 may determine a third output of the peripheral object algorithm, based on the behavioral pattern corresponding to the change in behavioral pattern trigger event, and control the transmitter 510 to transmit the third output to the peripheral object management device. That is, the processor 530 may obtain from the scenario information the condition information under which the driving pattern changes, and calculate and output the input values required for the peripheral object management device to change the driving pattern when the condition is satisfied.

According to one embodiment of the present disclosure, the peripheral object control algorithm management device 500 may receive external trigger information from an input device and algorithmically calculate and output input values required by the peripheral object management device to change to a driving pattern corresponding to the external trigger information.

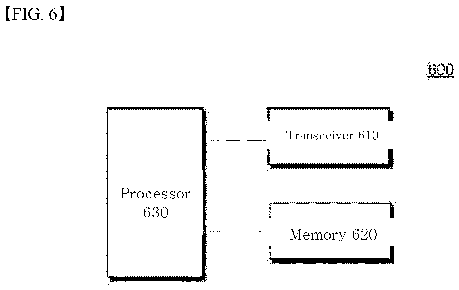

FIG. 6 is a block diagram of a simulation device according to one embodiment of the present disclosure.

Referring to FIG. 6, the simulation device 600 may include a transceiver 610, a memory 620, and a processor 630. However, not all of the components illustrated in FIG. 6 are required components of the simulation device 600. The simulation device 600 may be implemented with more components than those shown in FIG. 6, or the simulation device 600 may be implemented with fewer components than those shown in FIG. 6. Additionally, the transceiver 610, processor 630, and memory 620 may be implemented on a single chip.

In one embodiment, the simulation device 600 may further include at least some of the peripheral object control algorithm management device 500, the peripheral object management device, and the autonomous vehicle target management device. For example, the simulation device 600 may include a peripheral object management unit that controls peripheral objects based on scenario information and a peripheral object control algorithm, a self-driving target management unit that controls a self-driving target in response to receiving scenario information, and a self-driving target control algorithm.

The processor 630 controls the overall operation of the simulation device 600, and may include at least one processor such as a CPU, GPU, or the like. The processor 630 may control other configurations included in the simulation device 600 to perform actions to operate the simulation device 600. For example, the processor 630 may execute a program stored in the memory 620, read a stored file, or store a new file. In one embodiment, the processor 630 may execute a program stored in the memory 620 to perform operations to operate the simulation device 600.

In one embodiment, the processor 630 may control the transceiver 610 to receive a first output from the peripheral object control algorithm management unit and, based on the received first output, control the peripheral object. Wherein the first output may be an output value determined by a peripheral object control algorithm using the external trigger information as input.

In one embodiment, the processor controlling the operation of the peripheral object management device may determine the state of the peripheral object based on the output of the peripheral object control algorithm, and provide information regarding the determined state of the peripheral object to the peripheral object control algorithm management device and the autonomous vehicle target control algorithm management device.

In one embodiment, the processor controlling the operation of the autonomous object management device may determine the state of the autonomous object based on the output of the autonomous object control algorithm, and provide information regarding the determined state of the autonomous object to the peripheral object control algorithm management device and the autonomous object control algorithm management device.

One embodiment of the present disclosure may also be implemented in the form of a recording medium comprising computer-executable instructions, such as a program module executable by a computer. A computer-readable medium can be any available medium that can be accessed by a computer, and includes both volatile and non-volatile media, and removable and non-removable media. Further, a computer-readable medium may include both a computer storage medium and a communication medium. Computer storage media includes both volatile and non-volatile, removable and non-removable media embodied in any method or technology for the storage of information such as computer-readable instructions, data structures, program modules, or other data. A communication medium typically includes computer-readable instructions, data structures, or program modules, and may include any information-carrying medium.

The foregoing description of the present disclosure is by way of example, and one having ordinary skill in the art to which the present disclosure belongs will understand that it can be readily adapted to other specific forms without altering the technical idea or essential features of the invention. Accordingly, it should be understood that the embodiments described above are exemplary and non-limiting in all respects. For example, each component described as unitary may also be implemented as distributed, and similarly, components described as distributed may also be implemented as combined.

The scope of this disclosure is indicated by the following patent claims, rather than by the detailed description above, and shall be construed to include the meaning and scope of the claims and all modifications or variations derived from the equivalents thereof.

## Claims

1. A peripheral object control algorithm management device, the peripheral object control algorithm management device comprising:
a memory storing one or more instructions; and
at least one processor configured to execute the one or more instructions stored in the memory,
wherein the at least one processor execute the one or more instructions to:
obtain an external trigger information about a behavior of a peripheral object;
determine a first input of the peripheral object control algorithm, corresponding to the external trigger information about the behavior of the peripheral object;
determine the first output of the peripheral object control algorithm; and
provide the first output to a peripheral object management device.

2. The peripheral object control algorithm management device of claim 1, by executing the one or more instructions, the at least one processor configured to:
obtain scenario information about a driving pattern that includes at least one of a target speed, acceleration, driving lane, and destination;
determine a second output of the peripheral object control algorithm based on the scenario information;
transmit the second output to the peripheral object management device;
receive behavioral information of the peripheral object from the peripheral object management device; and
receive motion information of an autonomous-driving target from an autonomous-driving target management device.

3. The peripheral object control algorithm management device of claim 1 or 2, by executing the one or more instructions, the at least one processor configured to:
receive scenario information, which includes information about conditions that change the behavior pattern;
identify an event that triggers a change in the behavior pattern, based on the condition information that the behavior pattern changes;
determine a third output of the peripheral object control algorithm based on a behavior pattern corresponding to a change trigger event of the behavior pattern; and
transmit the third output to the peripheral object management device.

4. A simulation device, the simulation device comprising:
a peripheral object management device that receives scenario information and peripheral object control algorithms to control a peripheral object; and
an autonomous-driving target management device that controls an autonomous-driving target by receiving the scenario information and an autonomous-driving target control algorithm,
wherein the peripheral object management device is configured to:
receive from a peripheral object control algorithm management device a first output determined by the peripheral object control algorithm using external trigger information as input; and
control the peripheral object based on the first output.

5. The simulation device of claim 4, further comprising a peripheral object control algorithm management device, the peripheral object control algorithm management device configured to:
obtain the external trigger information;
determine the first output of the peripheral object control algorithm based on the external trigger information; and
provide the first output to the peripheral object management device.

6. The simulation device of claim 4 or 5, wherein the peripheral object management device is configured to:
determine the state of the peripheral object based on the output of the peripheral object control algorithm; and
provide a state of the peripheral object to the peripheral object control algorithm management unit and an autonomous-driving target control algorithm management unit.

7. The simulation device of any of claims 4 to 6, wherein the autonomous-driving target management device is configured to:
determine the state of the autonomous-driving target based on the output of the autonomous-driving target control algorithm; and
provide a state of the autonomous-driving target to the peripheral object control algorithm management device and the autonomous-driving target control algorithm management device.

8. A method for operating a peripheral object control algorithm management device, the method comprising:
obtaining externally triggered information about a behavior of a peripheral object;
identifying a first input of aperipheral object control algorithm, corresponding to external trigger information regarding the behavior of the peripheral object;
determining, based on the first input, a first output of the peripheral object control algorithm; and
providing the first output to a peripheral object management device.

9. The method of claim 8, further comprising:
obtaining scenario information about a driving pattern that includes at least one of a target speed, acceleration, driving lane, and destination;
determining, based on the scenario information, a second output of the peripheral object control algorithm;
transmitting the second output to the peripheral object management device;
receiving behavioral information of the peripheral object from the peripheral object management device; and
receiving motion information of the autonomous-driving target from an autonomous-driving target management device.

10. The method of claim 8 or 9, further comprising:
receiving scenario information, which includes information about conditions that change the behavior pattern;
identifying an event that triggers a change in the behavior pattern, based on information about a condition under which the behavior pattern changes;
determining a third output of the peripheral object control algorithm based on a behavior pattern corresponding to a change trigger event in the behavior pattern; and
transmitting the third output to the peripheral object management device.

11. The method for operating a simulation device, the method comprising:
receiving scenario information;
obtaining a peripheral object control algorithm;
receiving an autonomous-driving target control algorithm;
controlling a peripheral object, based on the scenario information and the peripheral object control algorithm; and
controlling the autonomous-driving target based on the scenario information and the autonomous-driving target control algorithm,
wherein the method further comprising:
receiving a first output determined by the peripheral object control algorithm with external trigger information as input; and
controlling the peripheral object based on the first output.

12. The method of claim 11, further comprising:
obtaining the external trigger information;
determining, based on the external trigger information, the first output of the peripheral object control algorithm; and
providing the first output to a peripheral object management device.

13. The method of claim 11 or 12, wherein the peripheral object control algorithm is transmitted from the peripheral object control algorithm management device, and wherein the peripheral object control algorithm management device is a separate device from the simulation device.

14. The method of any of claims 11 to 13, the action of controlling a peripheral object comprising:
determining a state of the peripheral object, based on the peripheral object control algorithm; and
providing a state of the peripheral object to a peripheral object control algorithm management device and an autonomous-driving target control algorithm management device.

15. The method of any of claims 11 to 14, the action of controlling the autonomous-driving target comprising:
determining a state of the autonomous target based on the autonomous target control algorithm; and
providing a state of the autonomous object to a peripheral object control algorithm management device and an autonomous object control algorithm management device.
